# EUROPÄISCHE PATENTSCHRIFT

(11) **EP 2 780 216 B1**
(45) Veröffentlichungstag und Bekanntmachung des Hinweises auf die Patenterteilung: **03.02.2016**
(21) Anmeldenummer: 12783123.8
(22) Anmeldetag: 05.11.2012
(51) Int. Cl.: B62D 25/14, B62D 29/04

(54) **INSTRUMENTENTAFELQUERTRÄGER FÜR EIN FAHRZEUG AUS FASERVERSTÄRKTEM KUNSTSTOFF**
INSTRUMENT PANEL CROSS MEMBER FOR A VEHICLE, MADE OF FIBER-REINFORCED PLASTIC
TRAVERSE SUPPORT DE TABLEAU DE BORD EN PLASTIQUE RENFORCÉ PAR FIBRES POUR UN VÉHICULE

(30) Priorität: 16.11.2011 DE 102011118722
(43) Veröffentlichungstag der Anmeldung: 24.09.2014
(73) Patentinhaber: Audi AG, 85045 Ingolstadt (DE)
(72) Erfinder: DEINZER, Günter, 55291 Saulheim (DE); SCHMID, Rainer, 74177 Bad Friedrichshall (DE)
(74) Vertreter: Mader, Wilfried
(86) Internationale Anmeldenummer: PCT/EP2012/004593
(87) Internationale Veröffentlichungsnummer: WO 2013/072021

(56) Entgegenhaltungen:
- EP-A2- 1 338 494
- EP-A2- 1 415 897
- WO-A1-01/70558
- DE-A1-102004 025 245
- DE-A1-102006 001 348

## Beschreibung

Die Erfindung betrifft einen Instrumententafelquerträger für ein Fahrzeug, welcher einen Modulquerträger und eine Instrumententafel umfasst, die jeweils aus faserverstärktem Kunststoff hergestellt sind.

Aus der gattungsbildenden DE 10 2008 021 103 A1 und DE 102006001348 ist ein Verbundbauteil aus faserverstärktem Kunststoff für ein Kraftfahrzeug bekannt, welches eine Stirnwand der Fahrzeugkabine und einen Querträger integriert und Halterungen für eine Instrumententafel und deren Komponenten aufweist, wobei die Instrumententafel ebenso aus einem faserverstärkten Kunststoff hergestellt werden kann.

Der Vorteil eines solchen bekannten Verbundbauteils gegenüber herkömmlichen mit Metall aufgebauten Karosserie-Baugruppen liegt in der Gewichtseinsparung. Nachteilig ist jedoch, dass trotz der in einem Verbundbauteil integrierten Stirnwand und Querträger zusätzliche Komponenten, insbesondere die Instrumententafel gesondert montiert werden müssen.

Aufgabe der Erfindung ist es, einen Instrumententafelträger der eingangs genannten Art derart weiterzubilden, dass ein Verbundbauteil entsteht, welches das Leichtbaupotential von Faserverbundmaterial maximal nutzt, ohne dass Nachteile hinsichtlich der erforderlichen Steifigkeit für ein solches Verbundbauteil in Kauf genommen werden müssen.

Diese Aufgabe wird gelöst durch einen Instrumententafelquerträger mit den Merkmalen des Patentanspruchs 1.

Ein solcher Instrumententafelquerträger für ein Fahrzeug, welcher einen Modulquerträger aus faserverstärktem Kunststoff und eine Instrumententafel aus faserverstärktem Kunststoff umfasst, zeichnet sich erfindungsgemäß dadurch aus, dass der Modulquerträger in Querrichtung des Fahrzeugs aus einem ersten und zweiten Querträgerteil ausgebildet ist, das erste Querträgerteil mit einem U-förmigen Profil ausgebildet ist und die Instrumententafel mit dem Modulquerträger formschlüssig gefügt ist, wobei das erste Querträgerteil mit der Instrumententafel ein geschlossenes Hohlprofil bildet.

Mit einem solchen erfindungsgemäßen Instrumententafelquerträger wird ein Verbundbauteil geschaffen, das aufgrund der teilweisen Ausbildung eines geschlossenen Hohlprofils eine hohe Steifigkeit aufweist und gleichzeitig zu einer weiteren Gewichtsreduzierung gegenüber bekannten baugruppen führt, die lediglich Modulquerträger mit einer Instrumententafel über an den Modulquerträger angeformte Halterungen, bspw. mittels Schrauben verbinden.

Damit ergibt sich ein Instrumententafelquerträger, der gleichzeitig ein Tragprofil und ein Sichtteil, nämlich die für einen Fahrzeuginsassen sichtbare Instrumententafel in einem einzigen Verbundbauteil integriert.

Ferner ergibt sich aufgrund der Mehrteiligkeit des Modulquerträgers der Vorteil, dass Gleichteile für mehrere Ausführungsvarianten des Instrumententafelquerträgers geschaffen werden können. Somit kann bspw. das zweite Querträgerteil als Gleichteil für mehrere Modellvarianten eines Kraftfahrzeugs verwendet werden, wobei zur Vervollständigung des erfindungsgemäßen Instrumententafelquerträgers vorgesehener erster Querträgerteil modelspezifisch angepasst werden kann. Auch umgekehrt kann das erste Querträgerteil als Gleichteil ausgebildet werden, so dass zur Vervollständigung des Modulquerträgers das zweite Querträgerteil modellspezifisch ausgeführt werden kann.

In einer Ausgestaltung der Erfindung ist das zweite Querträgerteil, das sich vorzugsweise von einer beifahrerseitigen A-Säule des Fahrzeugs bis zu einem Mitteltunnel erstreckt, im Wesentlichen eben ausgebildet und unter Bildung eines T-förmigen Profils formschlüssig mit der Instrumententafel verbunden. Damit ergibt sich auf der Beifahrerseite eine hohe Steifigkeit, die für dort anzubindenden Funktionsteile, wie Handschuhfach und Seitenairbag bei größtmöglicher Gewichtseinsparung ausreichend ist.

Besonders vorteilhaft ist es, wenn gemäß einer weiteren Ausgestaltung der Erfindung das erste Querträgerteil, das sich vorzugsweise von einer fahrerseitigen A-Säule des Fahrzeugs bis zu einem Mitteltunnel erstreckt, mehrteilig aus einem schalenartigen Vorderteil, einem schalenartigen Hinterteil und einem schalenartigen Bodenteil zur Bildung des U-Profils aufgebaut ist. Dies hat den Vorteil, dass dieser Bereich des Instrumententafelquerträgers, der mit einer großen Anzahl von funktionellen Einrichtungen der Kraftfahrzeugs verbunden wird bzw. aufnehmen muss, wie bspw. Lenksäule, Airbag, Instrumentengruppe, an die Festigkeits- und Steifigkeitsanforderungen angepasst werden kann.

Vorzugsweise weist dieses zweite Querträgerteil in einer Ausgestaltung der Erfindung zwei Abstützungen zur Verbindung mit dem Mitteltunnel und einen Befestigungsabschnitt zur Verbindung mit der beifahrerseitigen A-Säule auf.

In vorteilhafter Weise bietet es sich an, zur Bildung des ersten Querträgerteils das Vorderteil, das Hinterteil und das Bodenteil mittels einer Klebeverbindung stoffschlüssig und formschlüssig miteinander zu verbinden.

Ferner werden auch der Modulquerträger und die Instrumententafel mittels einer Klebeverbindung stoffschlüssig verbunden. Damit wird eine einfache und kostengünstige Montage des erfindungsgemäßen Instrumententafelquerträgers ermöglicht.

Als faserverstärkter Kunststoff zur Herstellung des erfindungsgemäßen Instrumententafelquerträgers ist weiterbildungsgemäß ein kohlefaserverstärkter Kunststoff (CFK) vorgesehen.

Die Erfindung wird nachfolgend anhand eines Ausführungsbeispiels unter Bezugnahme auf die beigefügten Figuren ausführlich beschrieben. Es zeigen:
- Figur 1: eine schematische perspektivische Darstellung eines Instrumententafelquerträgers gemäß der Erfindung,
- Figur 2: eine schematische Explosionsdarstellung des Instrumententafelquerträgers gemäß Figur 1,
- Figur 3: eine Darstellung des Instrumententafelquerträgers nach Figur 1 mit unverbundenen Instrumententafel und Modulquerträger,
- Figur 4: eine Schnittdarstellung mit einem Schnitt I-I des Instrumententafelquerträgers nach Figur 1, und
- Figur 5: eine Schnittdarstellung mit einem Schnitt II-II des Instrumententafelquerträgers nach Figur 1.

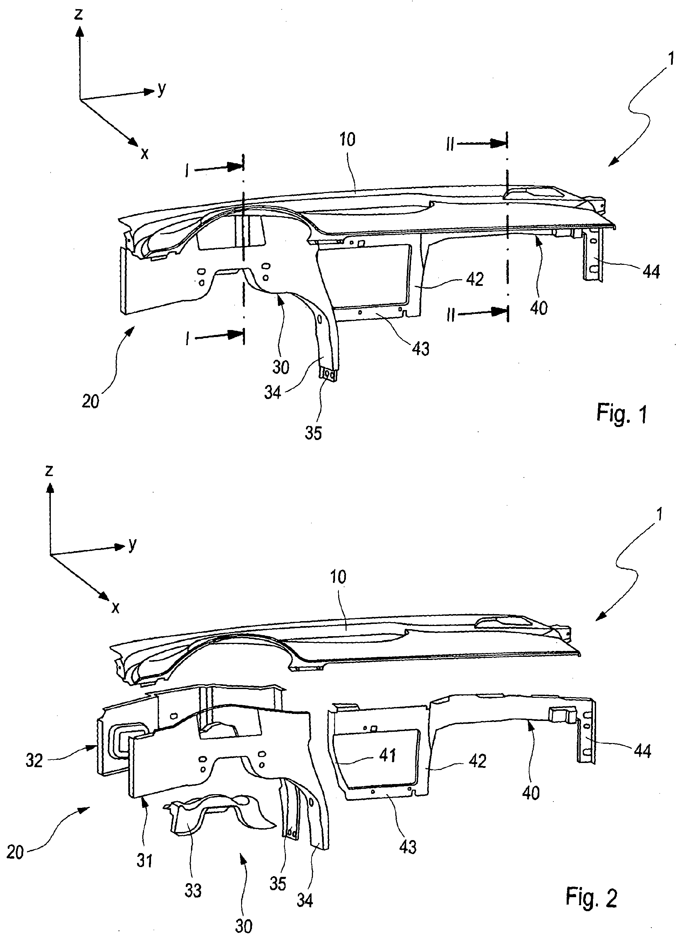

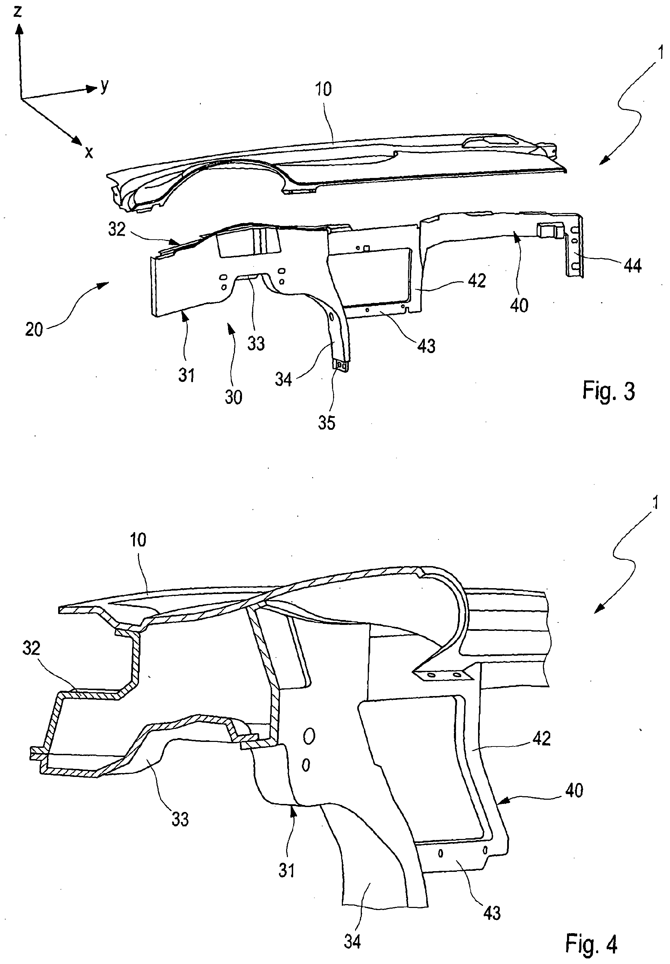

Der ausführungsbeispielgemäße Instrumententafelquerträger 1 eines Kraftfahrzeugs gemäß Figur 1 ist aus einer Instrumententafel 10 und einem mehrteiligen Modulquerträger 20 aufgebaut, wie aus Figur 3 ersichtlich ist. Alle Einzelteile des Instrumententafelquerträgers 1 sind aus einem Verbundmaterial, wie bspw. einem kohlenstoffverstärkten Kunststoff (CFK) hergestellt.

Der mehrteilige Modulquerträger 20 wird zwischen den beiden A-Säulen des Kraftfahrzeugs verbaut, erstreckt sich also in y-Richtung des Kraftfahrzeugs und umfasst gemäß Figur 2 ein erstes mehrteiliges Querträgerteil 30 sowie ein zweites Querträgerteil 40.

Das erste Querträgerteil 30 besteht aus drei Einzelteilen, nämlich einem schalenartigen Vorderteil 31, einem schalenartigen Hinterteil 32 und einem schalenartigen Bodenteil 33. Diese drei Einzelteile 31, 32 und 33 werden jeweils randseitig unter Bildung eines U-förmigen Profils mittels einer Klebeverbindung verklebt, wie dies aus der Darstellung des Schnittes I-I des Instrumententafelquerträgers 1 aus Figur 1 in Figur 4 ersichtlich ist.

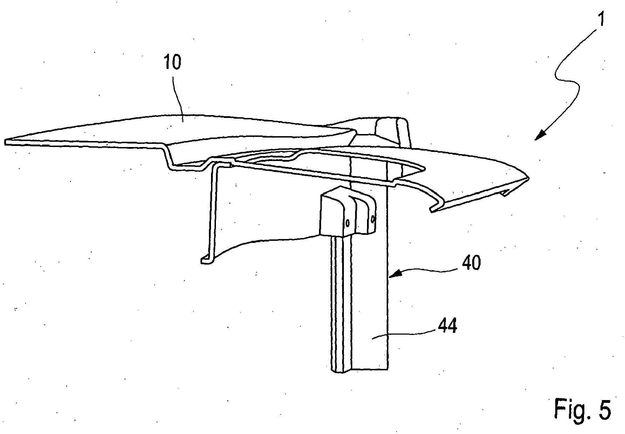

Das zweite Querträgerteil 40 gemäß Figur 5 ist im Wesentlichen eben ausgebildet (vgl. Figur 5) und weist zwei Abstützungen 41 und 42 zur Verbindung mit einem Mitteltunnel der Karosserie des Kraftfahrzeugs auf, die zusammen mit einer Querstrebe 43 ein Rechteck bildet, wobei die stirnseitig Abstützung 41 eine Stirnseite des zweiten Querträgerteils 40 bildet, die mit dem ersten Querträgerteil 30 eine Klebeverbindung eingeht. Die Anbindung des zweiten Querträgerteils 40 an die beifahrerseitige A-Säule erfolgt mittels eines Befestigungsabschnittes 44.

Zur Herstellung des ganzen Modulquerträgers 20 wird das erste Querträgerteil 30 in y-Richtung mit dem zweiten Querträgerteil 40 ebenso mittels einer Klebeverbindung verklebt. Dabei entspricht der stirnseitigen Abstützung 41 des zweiten Querträgerteils 40 jeweils einer Abstützung 34 bzw. 35 des Vorderteils 31 bzw. des Hinterteils 32, die zusammen mit der Abstützung 41 die Fügeflächen zur Herstellung einer Klebeverbindung zwischen den beteiligten Teilen dienen.

Dieser derart aufgebaute Modulquerträger 20 wird zur Herstellung des Instrumententafelquerträgers 1 mit der Instrumententafel 10 verklebt, so dass sich zusammen mit dem U-Profil des ersten Querträgerteils 30 und dem zweiten Querträgerteil 40 im Bereich des ersten Querträgerteils 30 ein geschlossenes Hohlprofil (vgl. Figur 4) bzw. im Bereich des zweiten Querträgerteils 40 ein T-förmiger Querschnitt (vgl. Figur 5) ergibt. Dabei überragt die Instrumententafel 1 in Richtung des Innenraums des Kraftfahrzeugs den Modulquerträger 20 dachförmig.

Durch den Verbund des teilweise U-förmigen Modulquerträgers 20 mit der Instrumententafel 10 entsteht ein teilweise geschlossenes Tragprofil mit einer hohen Steifigkeit, wobei durch die integrale Bauweise unter Einbezug einer für den Fahrzeuginsassen sichtbaren Instrumententafel das Leichtbaupotenzial des verwendeten CFK-Materials in höchstem Maß genutzt wird und daher zu einer hohen Gewichtseinsparung führt.

### Bezugszeichen

- 1: Instrumententafelquerträger

- 10: Instrumententafel

- 20: Modulquerträger

- 30: erstes Querträgerteil
- 31: Vorderteil
- 32: Hinterteil
- 33: Bodenteil
- 34: Abstützung des Vorderteils 41
- 35: Abstützung des Hinterteils 42

- 40: zweites Querträgerteil
- 41: Abstützung
- 42: Abstützung
- 43: Quersteg
- 44: Befestigungsabschnitt

## Patentansprüche

1. Instrumententafelquerträger (1) für ein Fahrzeug, umfassend einen Modulquerträger (20) aus faserverstärktem Kunststoff und eine Instrumententafel (10) aus faserverstärktem Kunststoff,
**dadurch gekennzeichnet, dass**
- der Modulquerträger (20) in Querrichtung des Fahrzeugs aus einem ersten und zweiten Querträgerteil (30, 40) ausgebildet ist,
- das erste Querträgerteil (30) mit einem U-förmigen Profil ausgebildet ist, und
- die Instrumententafel (10) mit dem Modulquerträger (20) formschlüssig gefügt ist, wobei das erste Querträgerteil (30) mit der Instrumententafel (10) ein geschlossenes Hohlprofil bildet.

2. Instrumententafelquerträger (1) nach Anspruch 1,
**dadurch gekennzeichnet, dass** das zweite Querträgerteil (40) im Wesentlichen eben ausgebildet ist, und unter Bildung eines T-förmigen Profils formschlüssig mit der Instrumententafel (10) verbunden ist.

3. Instrumententafelquerträger (1) nach Anspruch 1 oder 2,
**dadurch gekennzeichnet, dass** das erste Querträgerteil (30) mehrteilig aus einem schalenartigen Vorderteil (31), einem schalenartigen Hinterteil (32) und einem schälenartigen Bodenteil (33) zur Bildung eines U-Profils aufgebaut ist.

4. Instrumententafelquerträger (1) nach einem der vorhergehenden Ansprüche,
**dadurch gekennzeichnet, dass** das erste Querträgerteil (30) sich von einer beifahrerseitigen A-Säule des Fahrzeugs bis zu einem Mitteltunnel sich erstreckend ausgebildet ist.

5. Instrumententafelquerträger (1) nach einem der vorhergehenden Ansprüche,
**dadurch gekennzeichnet, dass** das zweite Querträgerteil (40) zwei Abstützungen (11, 42) zur Verbindung mit einem Mitteltunnel des Fahrzeugs und einen Befestigungsabschnitt (44) zur Verbindung mit einer beifahrerseitigen A-Säule aufweist.

6. Instrumententafelquerträger (1) nach einem der Ansprüche 3 bis 6,
**dadurch gekennzeichnet, dass** zur Bildung des ersten Querträgerteils (30) das Vorderteil (31), das Hinterteil (32) und das Bodenteil (33) mittels einer Klebeverbindung verbunden sind.

7. Instrumententafelquerträger (1) nach einem der vorhergehenden Ansprüche,
**dadurch gekennzeichnet, dass** der Modulquerträger (20) und die Instrumententafel (10) mittels einer Klebeverbindung stoffschlüssig verbunden sind.

8. Instrumententafelquerträger (1) nach einem der vorhergehenden Ansprüche,
**dadurch gekennzeichnet, dass** der Modulquerträger (20) und die Instrumententafel (10) aus einem kohlefaserverstärkten Kunststoff (CFK) hergestellt sind.

## Claims

1. Dashboard cross-member (1) for a vehicle, comprising a modular cross-member (20) of fibre-reinforced plastic and a dashboard (10) of fibre-reinforced plastic, **characterised in that**,
- the cross-member (20) is formed in the vehicle transverse direction from a first and second support cross-member (30, 40),
- the first support cross-member (30) is formed with a U-shaped profile, and
- the dashboard (10) is form-fit connected with the modular cross-member (20), wherein the first support cross-member (30) forms a closed hollow profile with the dashboard (10).

2. Dashboard cross-member (1) according to claim 1, **characterised in that**, the second support cross-member (40) is substantially flat, and is form-fit connected with the dashboard (10) to form a T-shaped profile..

3. Dashboard cross-member (1) according to claim 1 or 2, **characterised in that** the first support cross-member (30) in constructed from several parts including a shell-like front part (31), a shell-like rear part (32), and a shell-like bottom part (33), to form a U-profile.

4. Dashboard cross-member (1) according to one of the preceding claims, **characterised in that** the first support cross-member (30) is itself formed to extend from a passenger side A-pillar of the vehicle to a central tunnel.

5. Dashboard cross-member (1) according to one of the preceding claims, **characterised in that** the second support cross-member (40) has two supports (11, 42) for connection to a central tunnel of the vehicle and an attachment section (44) for connection to a passenger side A-pillar.

6. Dashboard cross-member (1) according to one of claims 3 to 6, **characterised in that** to form the first support cross-member (30), the front part (31), the rear part (32) and the bottom part (33) are connected by means of an adhesive connection.

7. Dashboard cross-member (1) according to one of the preceding claims, **characterised in that** the modular cross-member (20) and the dashboard (10) are integrally connected by means of an adhesive connection.

8. Dashboard cross-member (1) according to one of the preceding claims, **characterised in that** the modular cross-member (20) and the dashboard (10) are made of a carbon fibre reinforced plastic (CFRP).

## Revendications

1. Traverse de tableau de bord (1) pour un véhicule, comprenant une traverse modulaire (20) en matière plastique renforcée de fibres et un tableau de bord (10) en matière plastique renforcée de fibres,
**caractérisée en ce que** :
- la traverse modulaire (20) est formée dans la direction transversale du véhicule d'une première et d'une seconde partie de traverse (30, 40),
- la première partie de traverse (30) est formée avec un profil en forme de U et
- le tableau de bord (10) est assemblé mécaniquement à la traverse modulaire (20), dans laquelle la première partie de traverse (30) forme avec le tableau de bord (10) un profil creux fermé.

2. Traverse de tableau de bord (1) selon la revendication 1,
**caractérisée en ce que** la seconde partie de traverse (40) a une forme sensiblement plane et est reliée mécaniquement au tableau de bord (10) en formant un profil en T.

3. Traverse de tableau de bord (1) selon la revendication 1 ou la revendication 2, **caractérisée en ce que** la première partie de traverse (30) est formée de plusieurs parties, à savoir d'une partie avant en forme de coque (31), d'une partie arrière en forme de coque (32) et d'une partie de fond en forme de coque (33) pour former un profil en T.

4. Traverse de tableau de bord (1) selon l'une quelconque des revendications précédentes, **caractérisée en ce que** la première partie de traverse (30) est conçue pour s'étendre d'une colonne A côté passager avant du véhicule à un tunnel central.

5. Traverse de tableau de bord (1) selon l'une quelconque des revendications précédentes,
**caractérisée en ce que** la seconde partie de traverse (40) présente deux appuis (11, 42) pour relier à un tunnel central du véhicule et une section de fixation (44) pour relier à une colonne A côté passager avant.

6. Traverse de tableau de bord (1) selon l'une quelconque des revendications 3 à 6,
**caractérisée en ce que**, pour former la première partie de traverse (30), la partie avant (31), la partie arrière (32) et la partie de fond (33) sont raccordées au moyen d'un joint collé.

7. Traverse de tableau de bord (1) selon l'une quelconque des revendications précédentes,
**caractérisée en ce que** la traverse modulaire (20) et le tableau de bord (10) sont raccordés d'un seul tenant au moyen d'un joint collé.

8. Traverse de tableau de bord (1) selon l'une quelconque des revendications précédentes,
**caractérisée en ce que** la traverse modulaire (20) et le tableau de bord (10) sont fabriqués dans une matière plastique renforcée de fibres de carbone (CFK).
